# EUROPEAN PATENT APPLICATION

(11) **EP 4 691 857 A1**
(43) Date of publication of application: **11.02.2026**
(21) Application number: 23928999.4
(22) Date of filing: 24.03.2023
(51) Int. Cl.: B60R 16/02, B60R 16/023

(54) **INFORMATION INPUT SYSTEM FOR WORK MACHINE**

(71) Applicant: Hitachi Construction Machinery Co., Ltd., Tokyo 110-0015 (JP)
(72) Inventor: TOKITA Shigeki, Tsuchiura-shi, Ibaraki 300-0013 (JP); SAKAMOTO Hiroshi, Tsuchiura-shi, Ibaraki 300-0013 (JP); KUROKAMI Kazushige, Tsuchiura-shi, Ibaraki 300-0013 (JP); FUJINAMI Takumi, Tsuchiura-shi, Ibaraki 300-0013 (JP)
(74) Representative: MERH-IP Matias Erny Reichl Hoffmann Patentanwälte PartG mbB
(86) International application number: PCT/JP2023/012025
(87) International publication number: WO 2024/201617

(57) **Abstract**

An object of the present invention is to provide an information input system for a work machine capable of performing various kinds of settings of a work machine by using an information terminal while preventing an erroneous operation of the work machine. Therefore, in an information input system for a work machine including: a controller that is mounted on the work machine; and an information terminal that inputs information to the controller via communication, an input of the information from the information terminal to the controller is disabled in a case where the information terminal is located at a predetermined position in an operation room of the work machine.

## Description

### Technical Field

The present invention relates to an information input system for a work machine for inputting information to a work machine such as a hydraulic excavator.

### Background Art

In recent years, the computerization and informatization of a work machine such as a hydraulic excavator have advanced, and functions have also increased with an increase in the number of electronic equipment to be mounted.

For example, there is a function called machine guidance (MG) that assists work by calculating the positions and postures of a work machine and a work device from information acquired by various kinds of sensors attached to the work machine and the work device of the work machine and notifying an operator of the positional relation with a target face at the time of construction.

In addition, there is also a function called area limitation that assists work in a work area by calculating the degree of approach of a work machine and a work device to the boundary of the work area from information on the positions and postures of the work machine and the work device and information on the preset work area, and notifying an operator and limiting the operation of the work machine or the work device according to the degree of approach.

Further, there are also a function of notifying an operator of the situation around a work machine using image information or the like on the basis of information acquired from a sensor such as a camera mounted on the work machine, a function of detecting a worker in the vicinity and notifying the operator of the detected information, and the like.

In order to use such various functions, a device that inputs information for setting each function to a controller mounted on the work machine is required. Recently, various kinds of information devices including a touch panel monitor and the like have been utilized as an information input device for a work machine.

The types of information input devices have been increasing in addition to the increase in functions, and it is required not to operate these input devices erroneously during work. In particular, a device such as a touch panel that enables an operation input only by touching is likely to be erroneously operated by wrongly touching when operating an operation lever or the like of an actuator depending on the attachment position.

In an input control method for a touch panel monitor for a work machine of Patent Document 1, a monitor input is controlled to a monitor input locked state in which an input operation on the touch panel is impossible by releasing a hydraulic locked state by a hydraulic lock switch. The monitor input locked state is released by a monitor input lock release operation and is controlled so as to be switched to an input operation screen display. Since the operation input to the touch panel monitor is locked by this input control method when the work machine is operable, it is possible to prevent an erroneous operation when the work machine is operated. In addition, since the monitor input locked state can be released by the monitor input lock release operation, the operation input can be performed even in a case where it is necessary to temporarily operate the touch panel during work.

### Prior Art Document

### Patent Document

Patent Document 1: JP-2015-202841-A

### Summary of the Invention

### Problem to be Solved by the Invention

In the input control method for the touch panel monitor for a work machine of Patent Document 1, when the hydraulic lock switch is in the lock release state, the monitor input is controlled to the monitor input locked state in which the input to the touch panel monitor is locked to prevent an erroneous operation due to touching the touch panel monitor during the operation of the work machine.

However, in recent years, in addition to a case where various kinds of information input devices including a touch panel monitor are installed in an operation room of the work machine, there is a case where, for example, a tablet terminal possessed by an operator is carried for use in the operation room as a touch panel monitor. Further, another worker uses the same tablet terminal as the one possessed by the operator to check the state of the work machine and perform various kinds of settings from around the work machine in some cases.

In a case where the input control method in Patent Document 1 is applied to the tablet terminal that can be used even around the work machine as described above, the input to the tablet terminal possessed by a worker around the work machine is locked in response to the state of the hydraulic lock switch, and it becomes impossible to perform various kinds of settings of the work machine using the tablet terminal from around the work machine, resulting in deterioration of the work efficiency. On the other hand, in a case where the input control method in Patent Document 1 is not applied to the tablet terminal, there is a concern about an erroneous operation caused when an operator in the operation room touches an operation lever while using the tablet terminal.

The present invention has been made in view of the above problems, and an object thereof is to provide an information input system for a work machine capable of performing various kinds of settings of a work machine by using an information terminal while preventing an erroneous operation of the work machine.

### Means for Solving the Problem

In order to achieve the above object, the present invention provides an information input system for a work machine including: a controller that is mounted on the work machine; and an information terminal that inputs information to the controller via communication, and an input of the information from the information terminal to the controller is disabled in a case where the information terminal is located at a predetermined position in an operation room of the work machine.

### Advantages of the Invention

According to the present invention, it is possible to perform various kinds of settings of a work machine by using an information terminal while preventing an erroneous operation of the work machine.

### Brief Description of the Drawings

FIG. 1 is a right side view of a hydraulic excavator in a first embodiment.
FIG. 2 is an interior view of an operation room in the first embodiment.
FIG. 3 is a configuration diagram of an information input system for a work machine in the first embodiment.
FIG. 4 is a functional block diagram of the information input system for a work machine in the first embodiment.
FIG. 5 is a flowchart for depicting processing of the information input system for a work machine in the first embodiment.
FIG. 6 is a functional block diagram of an information input system for a work machine in a second embodiment.
FIG. 7 is a flowchart for depicting processing of the information input system for a work machine in the second embodiment.
FIG. 8 is a diagram for depicting display examples of a monitor in the second embodiment.
FIG. 9 is a flowchart for depicting processing of an information terminal controller in a third embodiment.
FIG. 10 is a diagram for depicting display examples of a monitor in the third embodiment.
FIG. 11 is a flowchart for depicting processing of an information terminal controller in a fourth embodiment.
FIG. 12 is a diagram for depicting display examples of a monitor in the fourth embodiment.
FIG. 13 is a flowchart for depicting processing of a work machine controller in a fifth embodiment.
FIG. 14 is a flowchart for depicting processing of an information terminal controller in the fifth embodiment.
FIG. 15 is a diagram for depicting display examples of a monitor in the fifth embodiment.
FIG. 16 is a flowchart for depicting processing of an information terminal controller in a sixth embodiment.
FIG. 17 is a diagram for depicting display examples of a monitor in the sixth embodiment.

### Modes for Carrying Out the Invention

Hereinafter, embodiments of the present invention will be described with reference to the drawings. In each of the drawings, the same reference numerals are given to equivalent members, and duplicated descriptions are appropriately omitted. It should be noted that although the present invention is applied to a hydraulic excavator in the present embodiments, the object to which the present invention is applied is not limited to a hydraulic excavator and the present invention can be applied to other work machines.

### [First Embodiment]

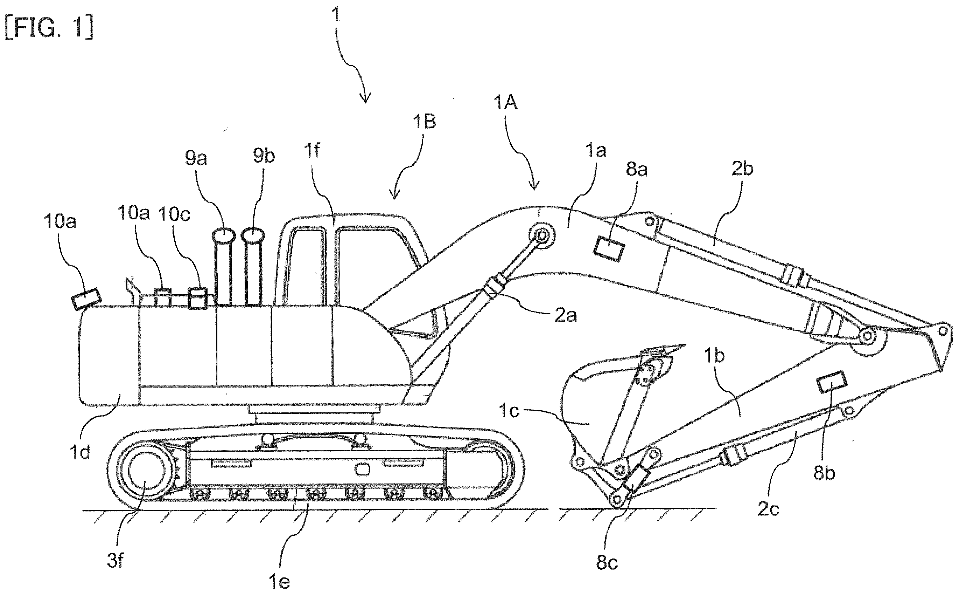

FIG. 1 is a right side view of a hydraulic excavator in a first embodiment. A hydraulic excavator 1 includes an articulated front work implement 1A including a boom 1a, an arm 1b, and a bucket 1c each of which rotates in the vertical direction, and a machine body 1B including an upper swing structure 1d and a lower travel structure 1e. The upper swing structure 1d is provided with an operation room 1f.

The proximal end of the boom 1a of the front work implement 1A is supported by the front part of the upper swing structure 1d. The boom 1a, the arm 1b, the bucket 1c, the upper swing structure 1d, and the lower travel structure 1e are driven by actuators of a boom cylinder 2a, an arm cylinder 2b, a bucket cylinder 2c, a swing motor 3d, and left and right travel motors 3e and 3f, respectively.

The upper swing structure 1d is mounted with an engine 4, a pump 5, and a valve 6 for operating the hydraulic excavator 1. The pump 5 is driven by the rotation of the engine 4 and delivers a hydraulic operating fluid. The valve 6 controls the flow rate of the hydraulic operating fluid by inputs from operation levers 7a, 7b, 7c, and 7d provided in the operation room 1f, and allows each actuator to operate.

Angle sensors 8a, 8b, and 8c for sensing the rotation angle of each part are attached to the boom 1a, the arm 1b, and the bucket 1c, respectively. In the upper swing structure 1d, GNSS antennas 9a and 9b for acquiring the position of the hydraulic excavator 1 and cameras 10a, 10b, and 10c for photographing the surroundings of the hydraulic excavator 1 are attached to the left side, the rear side, and the right side of the upper swing structure 1d.

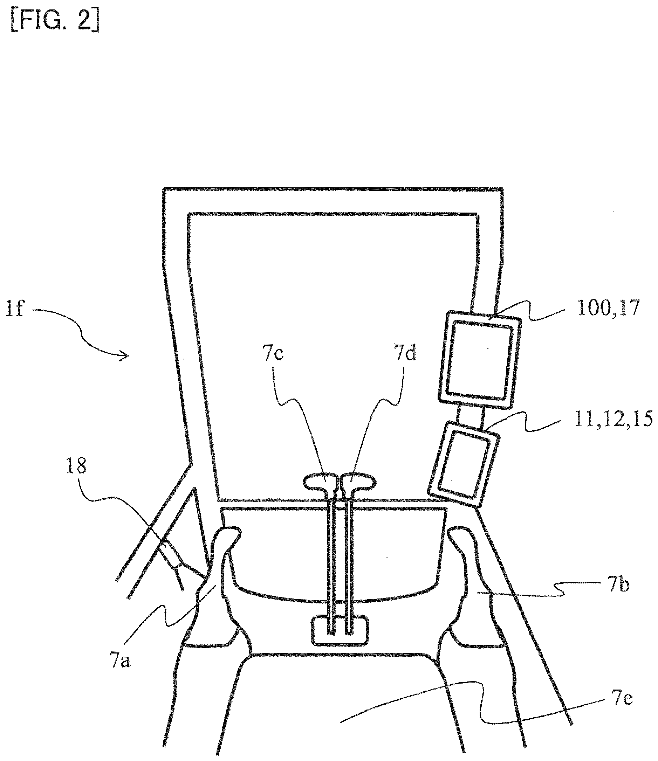

FIG. 2 is an interior view of the operation room 1f. In the operation room 1f, the operation levers 7a, 7b, 7c, and 7d, an operator seat 7e on which an operator is seated, a shut-off lever 18 for interrupting operation inputs from the operation levers 7a to 7d, a speaker 11 for outputting information to the operator by sound, and a monitor 12 as a display device for displaying information to the operator are installed. In the present embodiment, the speaker 11 is incorporated in the monitor 12, but the installation position of the speaker 11 is not limited to this as long as the sound can be transmitted to the operator. In addition, a touch panel 15 is mounted on the monitor 12 of the present embodiment. An information terminal 100 is mounted above the monitor 12. The information terminal 100 receives a power supply from the machine body 1B via a dock for an information terminal 17.

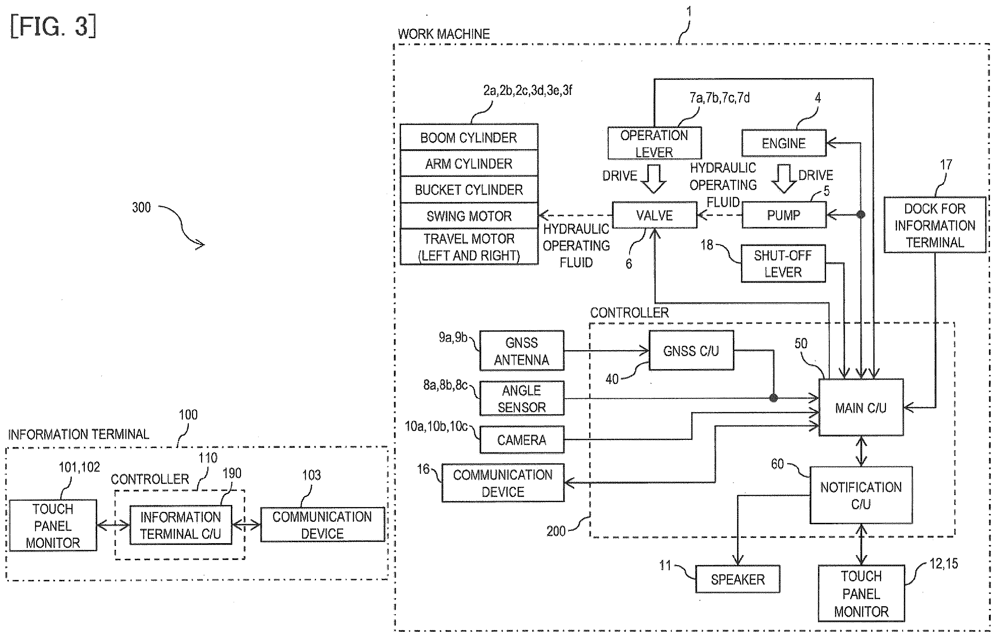

FIG. 3 is a configuration diagram of an information input system for a work machine in the first embodiment. An information input system for a work machine 300 includes a controller 200 mounted on the hydraulic excavator 1 and the information terminal 100 capable of inputting information to the controller 200 via communication.

The controller 200 of the hydraulic excavator 1 includes a main C/U 50 ("C/U" is an abbreviation of a controller unit and the same applies hereinafter), a GNSS_C/U 40 for processing information of the GNSS antennas 9a and 9b, and a notification C/U 60 for controlling various kinds of notifications to the operator. The main C/U 50 performs control of the basic system of the hydraulic excavator 1, such as engine control and pump control, and also controls the electrical activation of the hydraulic excavator 1, the start of the engine 4 as a prime mover, and the like. The main C/U 50 is also connected to a communication device 16 and communicates with various kinds of terminals and servers outside the hydraulic excavator. The notification C/U 60 calculates display information of the monitor 12 and sound information from the speaker 11 on the basis of the processing state of the main C/U 50, and sends a signal. Further, various kinds of setting signals are sent to the main C/U 50 in accordance with an input from the touch panel 15.

In addition, an information terminal controller 110 in the present embodiment includes an information terminal C/U 190. The information terminal C/U 190 is connected to a communication device 103 and a monitor 101, and the monitor 101 includes a touch panel 102. The information terminal C/U 190 presents information to the user and inputs information from the user through the monitor 101 and the touch panel 102, and exchanges necessary information with the server, the hydraulic excavator 1, and the like through the communication device 103 in accordance with setting of the information terminal C/U 190 by the user.

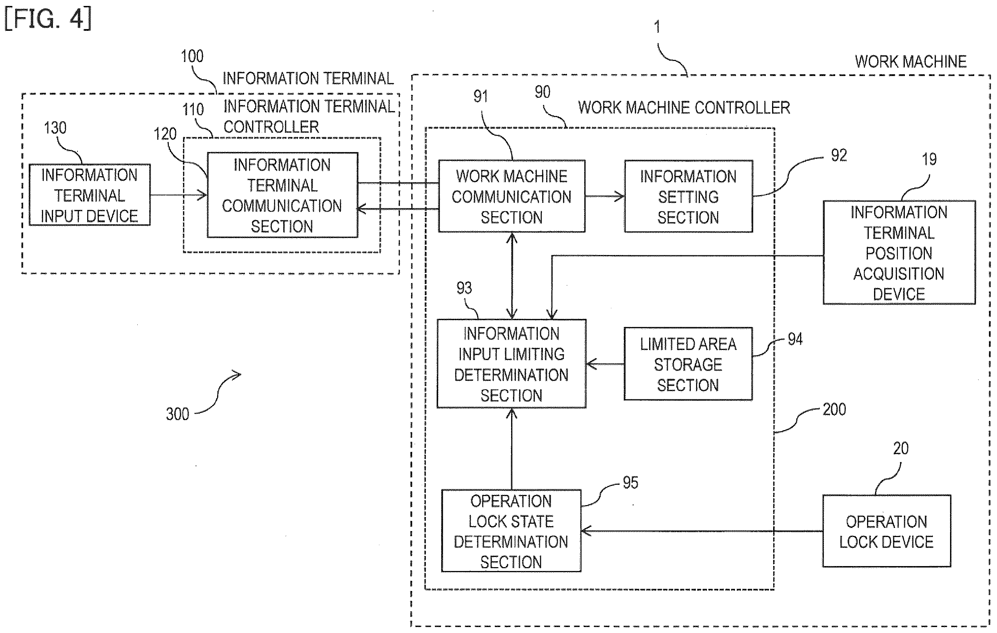

FIG. 4 is a functional block diagram of the information input system for a work machine 300 in the first embodiment. The information terminal 100 includes an information terminal input device 130 and the information terminal controller 110. The information terminal controller 110 includes an information terminal communication section 120 and communicates with the hydraulic excavator 1 on the basis of input information from the information terminal input device 130. The hydraulic excavator 1 includes an information terminal position acquisition device 19, an operation lock device 20, and a work machine controller 90. The work machine controller 90 includes a work machine communication section 91, an information setting section 92, an information input limiting determination section 93, a limited area storage section 94, and an operation lock state determination section 95, and exchanges various kinds of information with the information terminal 100 through the work machine communication section 91.

Hereinafter, each functional block will be described. The information terminal input device 130 is a device that is provided in the information terminal 100 and inputs an operation from the user, and refers to the touch panel 102 in the present embodiment, but may be any device in which an operation input from the user is possible, for example, a push-button type switch, a seesaw type switch, a voice input device, or the like.

The information terminal communication section 120 of the information terminal controller 110 exchanges information with the work machine communication section 91 in accordance with an input from the information terminal input device 130. In the present embodiment, communication with the hydraulic excavator 1 is established by the communication device 103 and the information terminal C/U 190. Regarding the communication method, any form of communication is possible as long as necessary information can be exchanged at a necessary frequency.

The information terminal position acquisition device 19 is a device for acquiring position information of the information terminal. In the present embodiment, the dock for an information terminal 17 corresponds to the information terminal position acquisition device 19. Since the dock for an information terminal 17 is a dock capable of supplying power to the information terminal 100, the position information of the information terminal 100 (whether the information terminal 100 exists at the position of the dock for an information terminal 17) can be acquired by determining whether the information terminal 100 is connected to the dock for an information terminal 17 from the situation of power supply. It should be noted that if the position information of the information terminal 100 can be acquired, the information terminal position acquisition device 19 is not limited to the dock for an information terminal 17. The position information of the information terminal 100 may be acquired by, for example, various kinds of communications by wireless, sensing by a sensor attached to the information terminal 100, GNSS, or the like. In addition, the position information may be acquired by a method of estimating the distance to the information terminal 100 by using the radio wave strength of wireless communication.

The operation lock device 20 is a device that disables the operations of various kinds of actuators of the hydraulic excavator 1. In the present embodiment, the shut-off lever 18 corresponds to the operation lock device 20, and the operations to the various kinds of actuators are disabled by interrupting signals of the operation inputs from the operation levers 7a to 7d according to the position of the lever.

The work machine communication section 91 is a part where the hydraulic excavator 1 communicates with the information terminal communication section120. In the present embodiment, the communication device 16 corresponds to the work machine communication section 91. The work machine communication section 91 performs various kinds of communications on the basis of information generated by various kinds of functions in the work machine controller 90. In addition, information from the communication destination is transmitted to the various kinds of functions in the work machine controller 90.

The information setting section 92 performs various kinds of settings of the hydraulic excavator 1. In the present embodiment, the setting of the hydraulic excavator 1 is changed in response to the operation input from the user of the information terminal acquired from the information terminal 100 via the work machine communication section 91.

The operation lock state determination section 95 determines the disabled states of the various kinds of actuators according to an input from the operation lock device 20. In the present embodiment, the disabled states of the various kinds of actuators are determined according to the state of the shut-off lever 18, and the result of the determination is output.

The limited area storage section 94 is a storage section for storing a limited area where the operation input from the information terminal 100 is limited. In the present embodiment, on the basis of whether the information terminal 100 is connected to the dock for an information terminal 17, it is determined whether the information terminal 100 exists in the limited area, and thus the position of the dock for an information terminal 17 is stored in the limited area storage section 94 as a position in the limited area. It is desirable that the limited area includes the vicinity of various kinds of operation devices of the hydraulic excavator 1. Since the dock for an information terminal 17 of the present embodiment is also installed in a pillar at the front, the position of the dock for an information terminal 17 is in the vicinity of various kinds of operation devices.

The information input limiting determination section 93 determines whether to limit the operation input from the information terminal 100 on the basis of the position information of the information terminal 100 from the information terminal position acquisition device 19, the limited area stored in the limited area storage section 94, and the determination result of the operation lock state determination section 95.

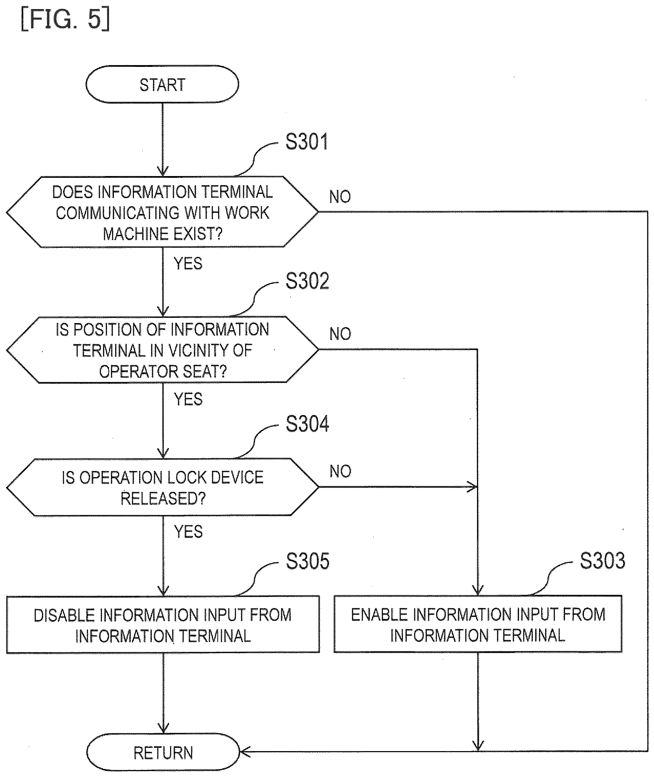

FIG. 5 is a flowchart for depicting processing of the information input system for a work machine 300 in the first embodiment. First, the information input limiting determination section 93 determines whether the information terminal 100 communicating with the hydraulic excavator 1 exists (Step S301). Whether the information terminal 100 is communicating with the hydraulic excavator 1 can be determined on the basis of whether the information terminal communication section 120 and the information terminal communication section 120 are communicating with each other. In a case where the determination result in Step S301 is NO (there is no information terminal 100 communicating with the hydraulic excavator 1), the flow is terminated because there is no information terminal 100 for which the input of information is disabled.

In a case where the determination result in Step S301 is YES (the information terminal 100 communicating with the hydraulic excavator 1 exists), the information input limiting determination section 93 determines whether the position of the information terminal 100 is in the vicinity of the operator seat 7e (Step S302). The information input limiting determination section 93 compares the position information of the information terminal 100 from the information terminal position acquisition device 19 with the limited area stored in the limited area storage section 94, and determines whether the information terminal 100 exists in the limited area. In the present embodiment, since the position of the dock for an information terminal 17 is used as the limited area, it is determined that the information terminal 100 exists in the limited area when it is connected to the dock for an information terminal 17, and that it does not exist in the limited area when it is not connected to the dock for an information terminal 17.

Where the determination result in Step S302 is NO, the information terminal 100 does not exist in the vicinity of the operator seat 7e, and thus the information input limiting determination section 93 enables the input of the information from the information terminal 100 (Step S303), and terminates the flow.

Where the determination result in Step S302 is YES, the operation lock state determination section 95 determines whether the operation inputs from the operation levers 7a to 7d are disabled (Step S304). Where the determination result in Step S304 is NO, the hydraulic excavator 1 is in an inoperable state, and thus the information input limiting determination section 93 enables the input of the information from the information terminal 100 (Step S303), and terminates the flow.

Where the determination result in Step S304 is YES, the hydraulic excavator 1 is in an operable state and the information terminal 100 exists in the vicinity of the operator seat 7e, and thus the information input limiting determination section 93 disables the input of the information from the information terminal 100 (Step S305), and terminates the flow. The disablement of the input operation from the information terminal 100 is notified to the information terminal 100 via the work machine communication section 91. As methods of disabling the input of the information from the information terminal 100, there are a method of setting the information terminal 100 to a locked state (a state in which the operation input is impossible), and a method of causing the work machine communication section 91 to discard the input information received from the information terminal 100.

### (Summary)

In the first embodiment, in the information input system for a work machine 300 that is provided with the controller 200 mounted on the hydraulic excavator 1 (work machine) and the information terminal 100 for inputting information to the controller 200 via communication, the input of the information from the information terminal 100 to the controller 200 is disabled in a case where the information terminal 100 is located at a predetermined position (the position of the dock for an information terminal 17) in the operation room 1f of the hydraulic excavator 1.

According to the first embodiment configured as described above, it is possible to perform various kinds of settings of the hydraulic excavator 1 using the information terminal 100 while preventing an erroneous operation of the hydraulic excavator 1.

In addition, the information input system for a work machine 300 in the first embodiment enables the input of the information from the information terminal 100 to the controller 200 in a case where the information terminal 100 is located at a position deviated from the predetermined position (the position of the dock for an information terminal 17). Accordingly, where the information terminal 100 is located outside the operation room 1f of the hydraulic excavator 1, the information terminal 100 can be used, and thus various kinds of settings of the hydraulic excavator 1 can be performed using the information terminal 100 from around the hydraulic excavator 1.

In addition, the information input system for a work machine 300 in the first embodiment enables the input of the information from the information terminal 100 to the controller 200 when the hydraulic excavator 1 is in an inoperable state even in a case where the information terminal 100 is located at the predetermined position (the position of the dock for an information terminal 17). Accordingly, by setting the hydraulic excavator 1 to an inoperable state, it is possible to perform various kinds of settings of the hydraulic excavator 1 using the information terminal 100 even from the inside of the operation room 1f.

In addition, the information input system for a work machine 300 in the first embodiment disables the input of the information from the information terminal 100 to the controller 200 by making the input operation to the information terminal 100 impossible. Accordingly, it is possible to cause the user to surely recognize that the input of the information from the information terminal 100 to the controller 200 is disabled.

### [Second Embodiment]

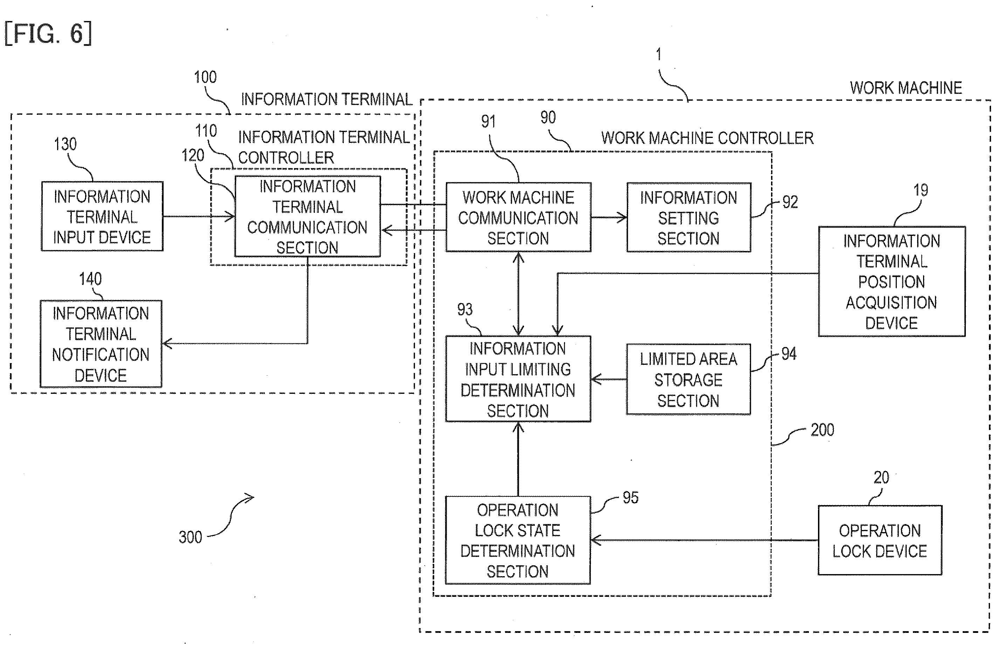

FIG. 6 is a functional block diagram of an information input system for a work machine 300 in a second embodiment. The difference from the first embodiment .(depicted in FIG. 4) is that the information terminal 100 includes an information terminal notification device 140. The information terminal notification device 140 notifies the user of information on the basis of the information from the information terminal communication section 120. In the present embodiment, the monitor 101 configures the information terminal notification device 140, but this does not apply if information can be notified to the user. For example, the monitor 101 may be configured using a vibration device for notifying the user by vibration or an acoustic device for notifying the user by sound.

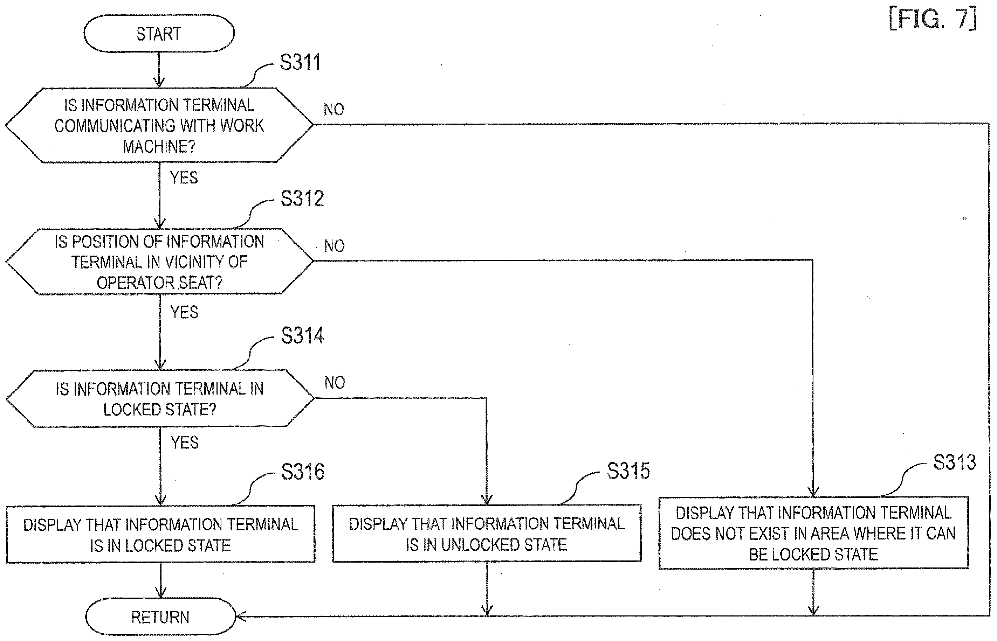

FIG. 7 is a flowchart for depicting processing of the information input system for a work machine 300 in the second embodiment. First, the information input limiting determination section 93 determines whether the information terminal 100 is communicating with the hydraulic excavator 1 (Step S311). Where the determination result in Step S301 is NO (the information terminal 100 is not communicating with the hydraulic excavator 1), the flow is terminated.

Where the determination result in Step S311 is YES, the information input limiting determination section 93 determines whether the position of the information terminal 100 is in the vicinity of the operator seat 7e (Step S312). Where the determination result in Step S312 is NO (the position of the information terminal 100 is not in the vicinity of the operator seat 7e), the information terminal controller 110 displays on the monitor 101 that the information terminal does not exist in the area where the information terminal 100 can be locked (Step S313), and terminates the flow.

Where the determination result in Step S312 is YES (the position of the information terminal 100 is in the vicinity of the operator seat 7e), the information terminal controller 110 determines whether the information terminal 100 is in the locked state (Step S314). Where the determination result in Step S314 is NO (the information terminal 100 is not in the locked state), the information terminal controller 110 displays on the monitor 101 that the information terminal 100 is in the unlocked state (Step S315), and terminates the flow.

Where the determination result in Step S314 is YES (the information terminal 100 is in the locked state), the information terminal controller 110 displays on the monitor 101 that the information terminal 100 is in the locked state (Step S316), and terminates the flow.

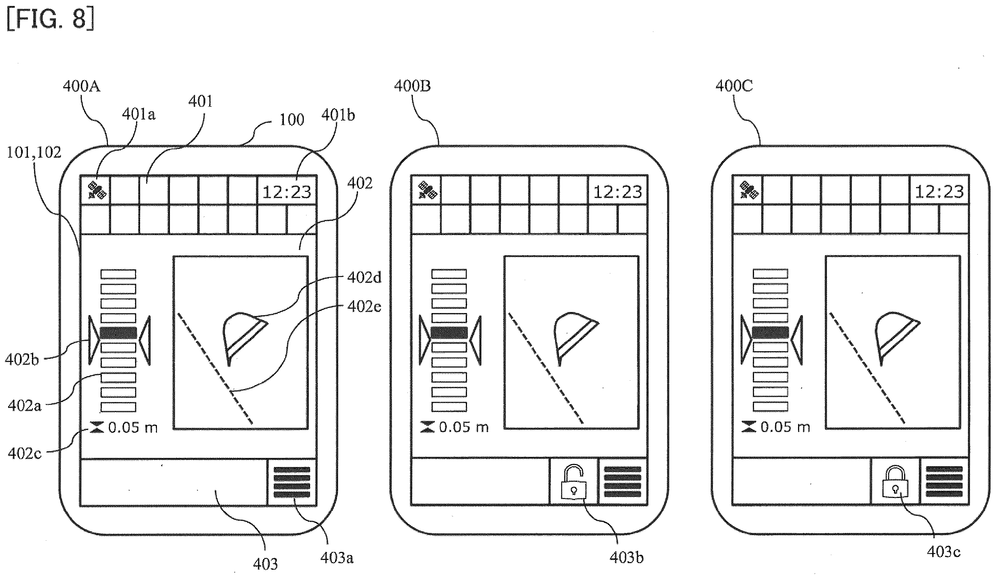

FIG. 8 is a diagram for depicting display examples of the monitor 101 in the second embodiment. In the present embodiment, as an example, machine guidance is displayed on the information terminal 100 for the purpose of improving the work efficiency by notifying the operator of the positional relation between the bucket 1c of the hydraulic excavator 1 and a preset target face.

A display example 400A is a display depicting that the information terminal 100 does not exist in the area where it can be locked, according to Step S313 of FIG. 7. The liquid crystal part of the monitor 101 displays various kinds of information in roughly three areas. In a header area 401 in the upper section, an icon 401a indicating the communication states of the GNSS antennas 9a and 9b and a time 401b are displayed. In a middle area 402 in the middle section, the positional relation between the bucket 1c and the target face is displayed. A light bar 402a on the left side of the middle section displays the distance between the bucket 1c and the target face as a bar. A marker 402b indicates a point at which the target face coincides with the position of the bucket 1c in the light bar 402a. A distance 402c between the bucket 1c and the target face is displayed immediately below the light bar 402a. On the right side of the middle section, a bucket picture 402d simulating the bucket 1c and a target face 402e are displayed in such a manner that the actual positional relation of the bucket 1c in the rotation plane can be recognized. In a footer area 403 in the lower section, a menu icon 403a for opening a menu is displayed.

A display example 400B is a display depicting that the information terminal 100 is in the unlocked state according to Step S315 of FIG. 7. The display example 400B depicts that the operation input is possible (unlocked state) by displaying an unlock icon 403b in the footer area 403. A display example 400C is a display depicting that the information terminal 100 is in the locked state according to Step S314 of FIG. 7. The display example 400C depicts that the operation input is impossible (locked state) by displaying a lock icon 403c.

### (Summary)

The information terminal 100 in the second embodiment has the information terminal notification device 140, and the information terminal notification device 140 reports at least either the information on whether the information terminal 100 is located at the predetermined position (the position of the dock for an information terminal 17) or the information on whether the input of the information from the information terminal 100 to the controller 200 is disabled.

According to the second embodiment configured as described above, it is possible to cause the user to easily grasp whether the input of the information from the information terminal 100 to the controller 200 is disabled and whether the information terminal 100 is located at the position where the input of the information from the information terminal 100 to the controller 200 can be disabled.

### [Third Embodiment]

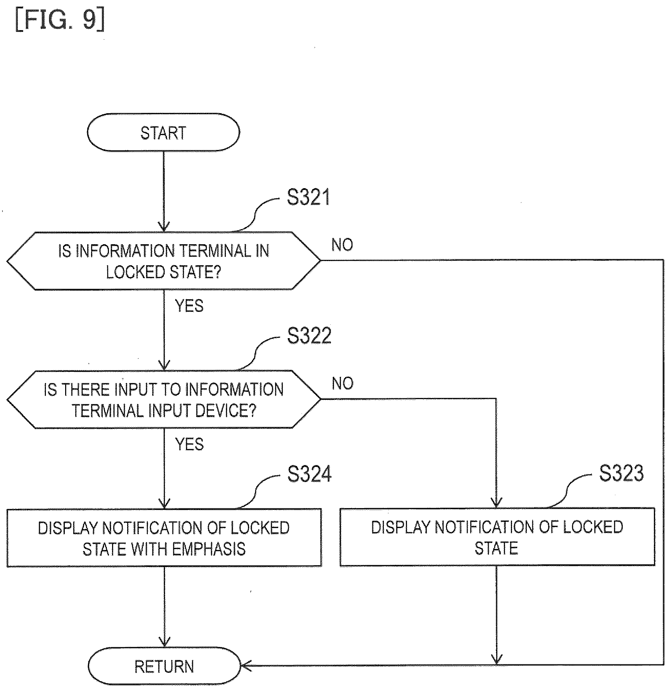

FIG. 9 is a flowchart for depicting processing of an information terminal controller 110 in a third embodiment. First, the information terminal controller 110 determines whether the information terminal 100 is in the locked state (Step S321). Where the determination result in Step S321 is NO (the information terminal 100 is in the unlocked state), the flow is terminated.

Where the determination result in Step S321 is YES (the information terminal 100 is in the locked state), it is determined whether there is an input to the information terminal input device 130 (Step S322). Where the determination result in Step S322 is NO (there is no input to the information terminal input device 130), the monitor 101 displays a notification of the locked state (Step S323), and the flow is terminated.

Where the determination result in Step S322 is YES (there is an input to the information terminal input device 130), the monitor 101 displays a notification of the locked state with emphasis (Step S324), and the flow is terminated.

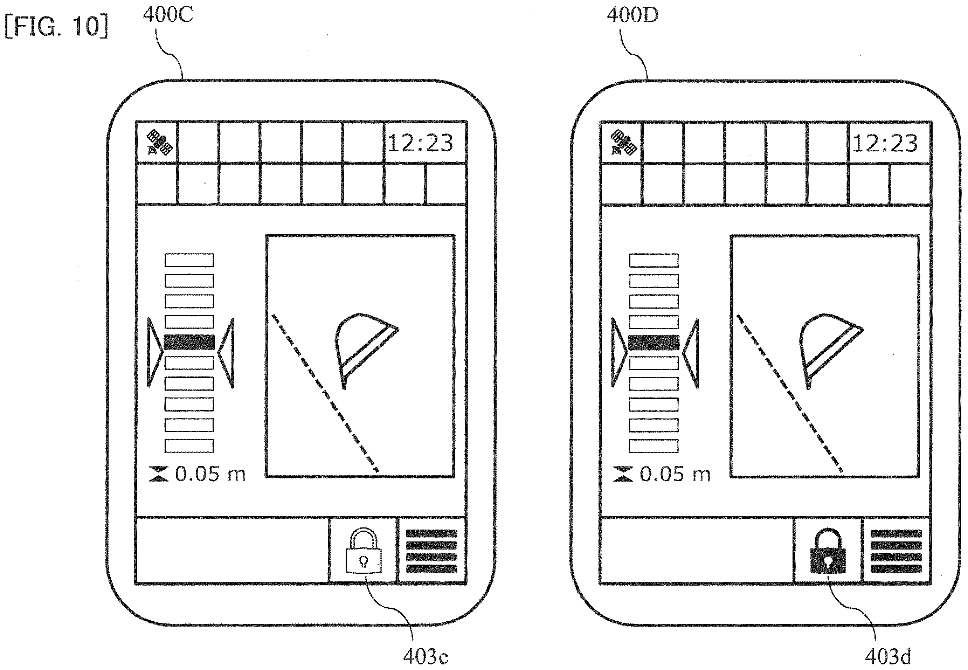

FIG. 10 is a diagram for depicting display examples of the monitor 101 in the third embodiment. A display example 400C is a display when the locked state is notified, according to Step S323 of FIG. 9. In the display example 400C, the locked state is notified by displaying the lock icon 403c. A display example 400D is a display when the locked state is notified with emphasis, according to Step S324 of FIG. 9. In the display example 400D, an emphasis lock icon 403d of a color more conspicuous relative to the lock icon 403c is displayed for notification of the locked state with emphasis. In the present embodiment, the color of the icon is changed as means of emphasis, but this does not apply if emphasis is performed in consideration of ergonomics.

### (Summary)

The information terminal 100 in the third embodiment has the information terminal notification device 140, and when the input operation is performed on the information terminal 100 in a state where the input of the information from the information terminal 100 to the controller 200 is disabled (locked state), the information terminal notification device 140 (monitor 101) reports information indicating that the input of the information from the information terminal 100 to the controller 200 is disabled (the lock icon 403c) in a more emphasized manner relative to a case where no input operation is performed on the information terminal 100.

According to the present embodiment configured as described above, when the user performs an input operation on the information terminal 100 without noticing the disabled state of the input of the information from the information terminal 100 to the controller 200, the disablement of the input of the information from the information terminal 100 to the controller 200 is reported in an emphasized manner, and thus it is possible to cause the user to surely recognize that the input of the information from the information terminal 100 to the controller 200 is disabled.

### [Fourth Embodiment]

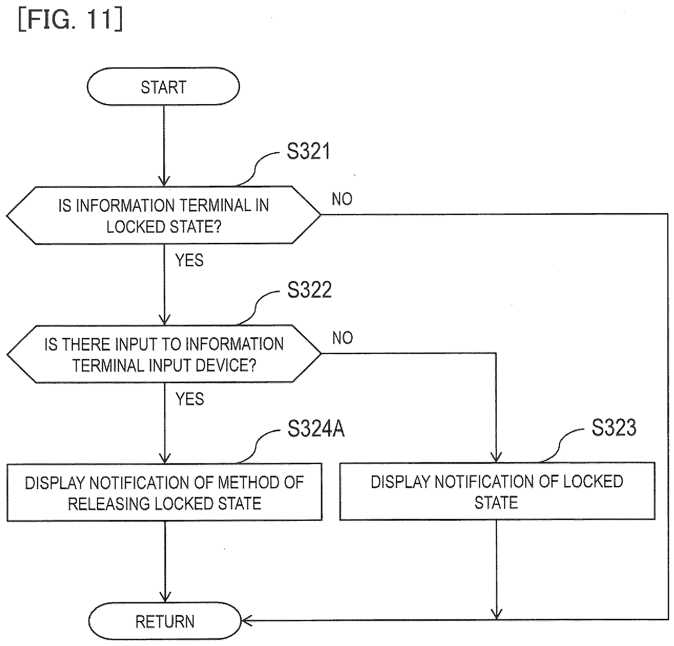

FIG. 11 is a flowchart for depicting processing of an information terminal controller 110 in a fourth embodiment. The difference from the third embodiment (depicted in FIG. 9) is that Step S324A is executed instead of Step S324. In Step S324A, a notification of a method of releasing the locked state is displayed on the monitor 101.

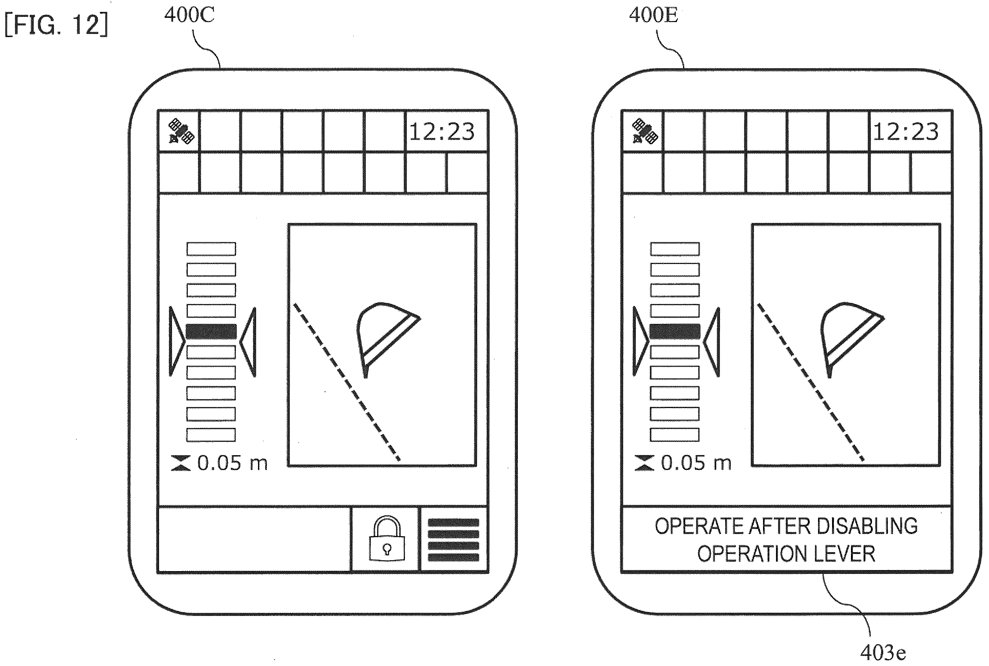

FIG. 12 is a diagram for depicting display examples of the monitor 101 in the fourth embodiment. A display example 400C is a display when notification of the locked state is given by the information terminal 100, according to Step S323 of FIG. 11. A display example 400E is a display when the information terminal 100 is in the locked state and there has been an input to the information terminal input device 130, according to Step S325 of FIG. 11. In a display example 400F, the method of releasing the locked state is notified by displaying a locked state release method 403e on the lower part of the monitor 101.

### (Summary)

The information terminal 100 in the fourth embodiment has the information terminal notification device 140, and the information terminal notification device 140 (monitor 101) reports information indicating a method of enabling the input of the information from the information terminal 100 to the controller 200 (locked state release method 403e) in a case where an input operation is performed on the information terminal 100 in a state where the input of the information from the information terminal 100 to the controller 200 is disabled.

According to the fourth embodiment configured as described above, since it is possible to cause the user to easily grasp the method of enabling the input of the information from the information terminal 100 to the controller 200, the work efficiency can be improved.

### [Fifth Embodiment]

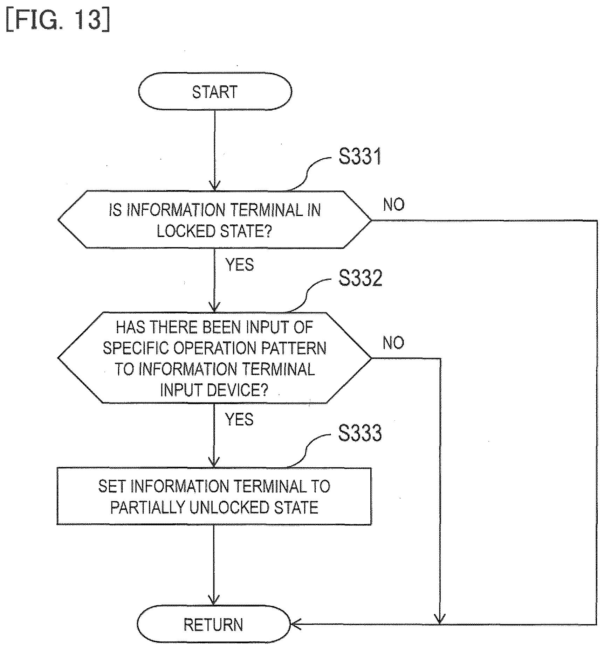

FIG. 13 is a flowchart for depicting processing of a work machine controller 90 in a fifth embodiment. First, the work machine controller 90 determines whether the information terminal 100 is in the locked state (Step S331). Where the determination result in Step S331 is NO (the information terminal 100 is in the unlocked state), the flow is terminated.

Where the determination result in Step S331 is YES (the information terminal 100 is in the locked state), it is determined whether there is an input of a specific operation pattern to the information terminal input device 130 (Step S332). The specific operation pattern here means a preliminarily-defined operation input pattern, and the input methods to the touch panel 102 in the present embodiment include, but are not limited to, for example, swiping, double-tapping, and the like. Where the determination result in Step S332 is NO (there is no input of the specific operation pattern), the flow is terminated.

Where the determination result in Step S332 is YES (there is an input of the specific operation pattern), the information terminal 100 is set to a partially unlocked state in which the disablement of the input of the information is partially released (Step S333), and the flow is terminated.

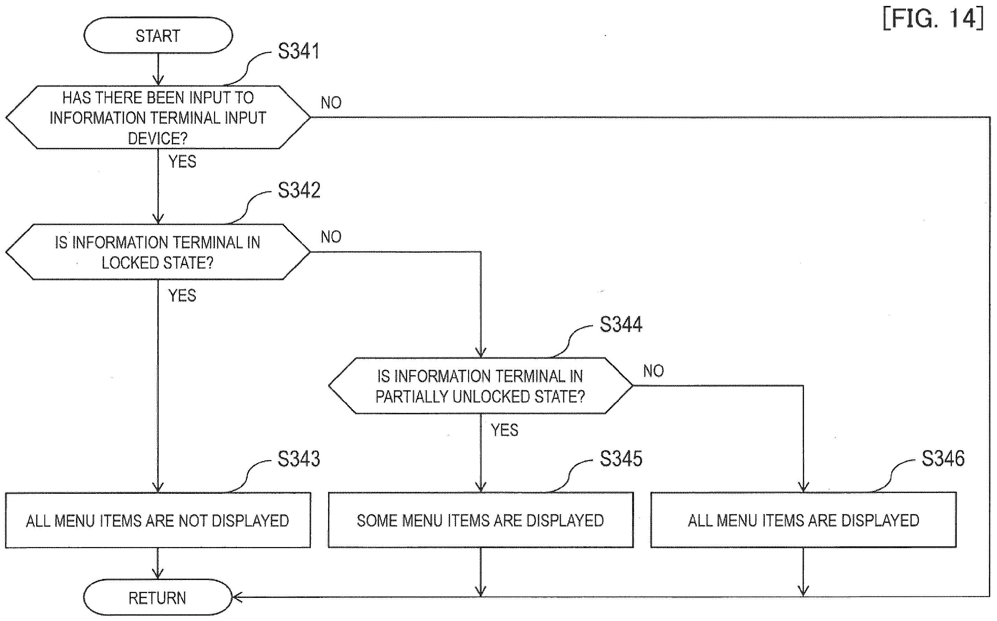

FIG. 14 is a flowchart for depicting processing of the information terminal controller 110 in the fifth embodiment. First, the information terminal controller 110 determines whether there has been an input to the information terminal input device 130 (Step S341). In a case where the determination result in Step S341 is NO (there has been no input to the information terminal input device 130), the flow is terminated.

Where the determination result in Step S341 is YES (there has been an input to the information terminal input device 130), it is determined whether the information terminal 100 is in the locked state (Step S342). Where the determination result in Step S342 is YES (the information terminal 100 is in the locked state), all the menu items are not displayed on the monitor 101 (Step S343), and the flow is terminated.

Where the determination result in Step S342 is NO (the information terminal 100 is not in the locked state), it is determined whether the information terminal 100 is in the partially unlocked state (Step S344). Where the determination result in Step S344 is YES (the information terminal 100 is in the partially unlocked state), some menus are displayed on the monitor 101 (Step S345), and the flow is terminated. Where the determination result in Step S344 is NO (the information terminal 100 is not in the partially unlocked state, that is, the information terminal 100 is in the unlocked state), all the menus are displayed on the monitor 101 (Step S346), and the flow is terminated.

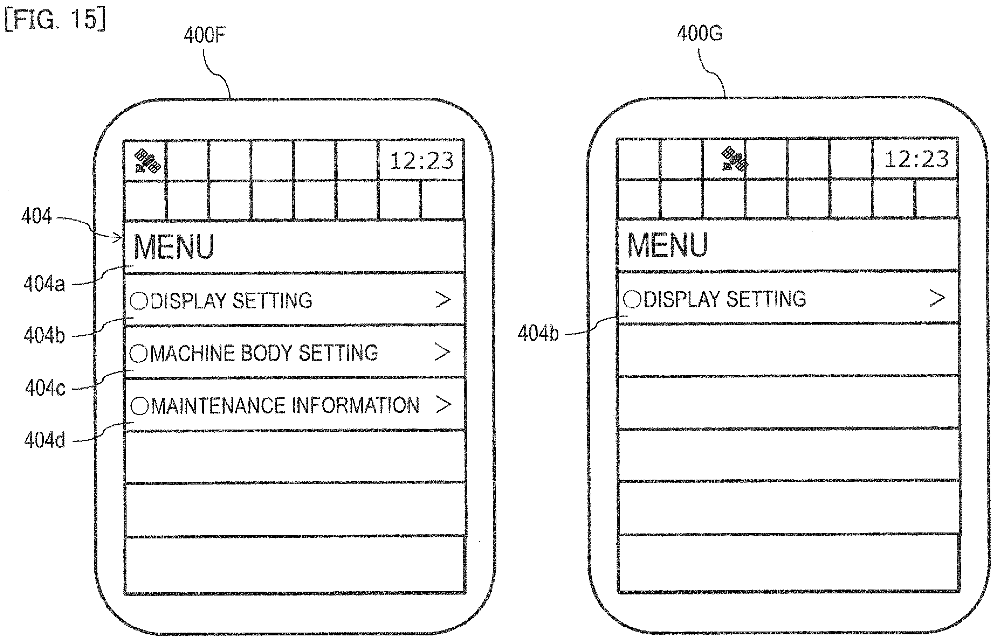

FIG. 15 is a diagram for depicting display examples of the monitor 101 in the fifth embodiment. A display example 400F is a menu display when the information terminal 100 is in the unlocked state according to Step S346 of FIG. 14. A menu 404 is configured with a menu title 404a and menu items 404b, 404c, and 404d. In the display example 400F, all the menu items 404b to 404d are displayed. A display example 400G is a menu display when the information terminal 100 is in the partially unlocked state according to Step S345 of FIG. 14. In the display example 400G, only the menu item 404b is displayed.

### (Summary)

The information input system for a work machine 300 in the fifth embodiment enables a part of the input operation to the information terminal 100 when a specific operation is performed on the information terminal 100 in a state where the input of the information from the information terminal 100 to the controller 200 is disabled.

According to the fifth embodiment configured as described above, even where the input operation to the information terminal 100 is disabled, a part of the input operation can be exceptionally enabled, and thus the work efficiency can be improved.

### [Sixth Embodiment]

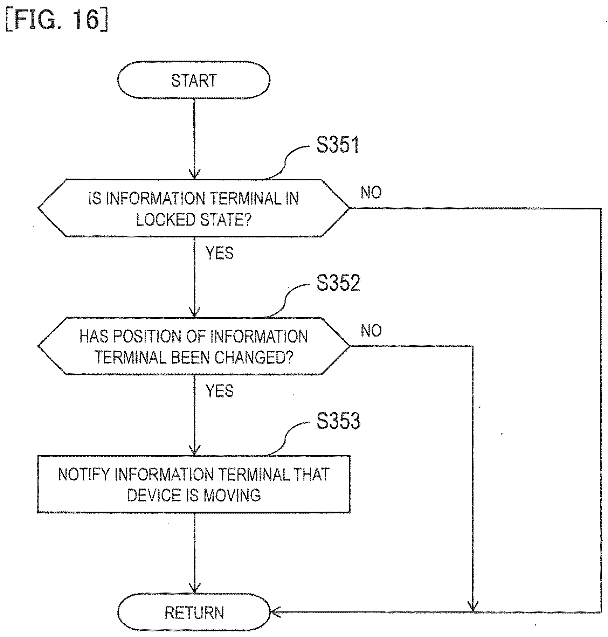

FIG. 16 is a flowchart for depicting processing of an information terminal controller 110 in a sixth embodiment. First, the information terminal controller 110 determines whether the information terminal 100 is in the locked state (Step S351). Where the determination result in Step S351 is NO (the information terminal 100 is in the unlocked state), the flow is terminated.

Where the determination result in Step S351 is YES (the information terminal 100 is in the locked state), it is determined whether the position of the information terminal 100 has been changed (Step S352). Where the determination result in Step S352 is NO (the position of the information terminal 100 has not been changed), the flow is terminated.

Where the determination result in Step S352 is YES (the position of the information terminal 100 has been changed), information for notifying that the position of the information terminal 100 has been changed is notified via the information terminal notification device 140 (Step S353), and the flow is terminated.

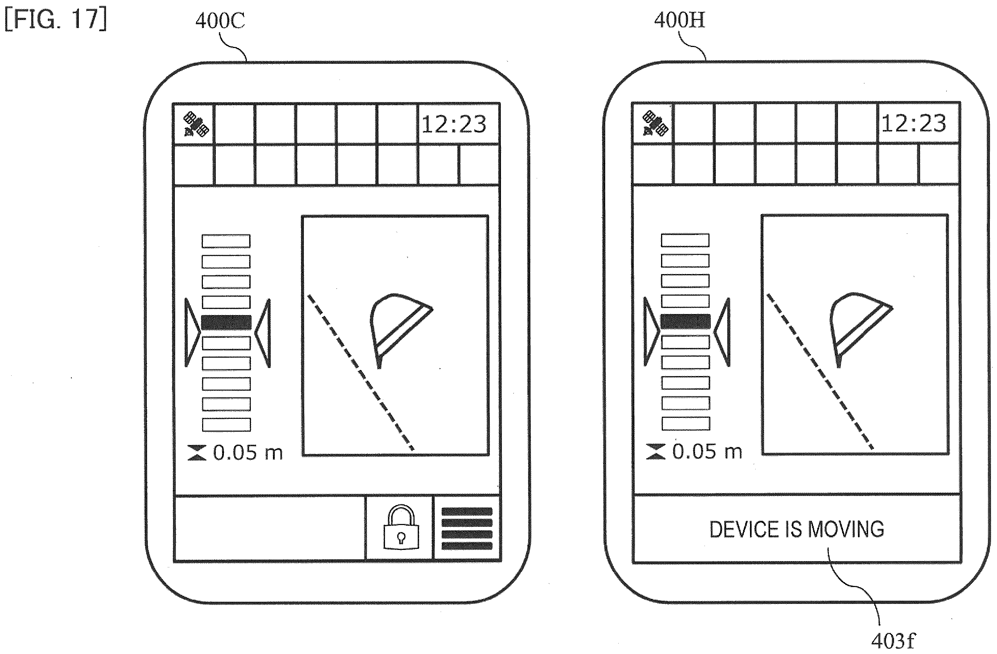

FIG. 17 is a diagram for depicting display examples of the monitor 101 in the sixth embodiment. A display example 400C is a display when the information terminal 100 is in the locked state and the position of the information terminal 100 has not been changed. A display example 400H is a display when the information terminal 100 is in the locked state and the position of the information terminal 100 has been changed. In the display example 400H, a movement notification 403f is displayed on the lower part of the monitor 101 to notify that the position of the information terminal 100 has been changed. When the information terminal 100 is in the locked state, the information terminal 100 is in the vicinity of the operator seat 7e, and the operations of the operation levers 7a to 7d are not disabled. Where the information terminal 100 is moved under such a situation, there is a concern that the operation levers 7a to 7d are erroneously operated by being touched. In the present embodiment, it is possible to cause the user to recognize that the information terminal 100 is in the locked state (that is, the operations of the operation levers 7a to 7d are not disabled) by notifying the user when the information terminal 100 in the locked state moves, and thus it is possible to prevent erroneous operations of the operation levers 7a to 7d.

### (Summary)

The information terminal 100 in the sixth embodiment has the information terminal notification device 140, and the information terminal notification device 140 reports information indicating that the position of the information terminal 100 has been changed (movement notification 403f) when the position of the information terminal 100 has been changed in a state where the input of the information from the information terminal 100 to the controller 200 is disabled.

According to the sixth embodiment configured as described above, since it is possible to cause the operator to recognize that the information terminal 100 is moving, it is possible to prevent an erroneous operation caused by touching the operation levers 7a to 7d during the movement of the information terminal 100.

Although the embodiments of the present invention have been described in detail above, the present invention is not limited to the above-described embodiments and includes various modified examples. For example, the above-described embodiments have been described in detail for the purpose of clearly explaining the present invention, and are not necessarily limited to those having all the configurations described. In addition, a part of a configuration of an embodiment can be added to a configuration of another embodiment, or a part of a configuration of an embodiment can be deleted or replaced with a part of another embodiment.

### Description of Reference Characters

1: Hydraulic excavator (work machine)
1a: Boom
1A: Front work implement
1b: Arm
1B: Machine body
1c: Bucket
1d: Upper swing structure
1e: Lower travel structure
1f: Operation room
2a: Boom cylinder
2b: Arm cylinder
2c: Bucket cylinder
3d: Swing motor
3e, 3f: Travel motor
4: Engine
5: Pump
6: Valve
7a to 7d: Operation lever
7e: Operator seat
8a to 8c: Angle sensor
9a, 9b: GNSS antenna
10a to 10c: Camera
11: Speaker
12: Monitor
14: Key cylinder
15: Touch panel
16: Communication device
17: Dock for information terminal
18: Shut-off lever
19: Information terminal position acquisition device
20: Operation lock device
90: Work machine controller
91: Work machine communication section
92: Information setting section
93: Information input limiting determination section
94: Limited area storage section
95: Operation lock state determination section
100: Information terminal
101: Monitor
102: Touch panel
103: Communication device
110: Information terminal controller
120: Information terminal communication section
130: Information terminal input device
140: Information terminal notification device
200: Controller
300: Information input system for work machine
401: Header area
401a: Icon
401b: Time
402: Middle area
402a: Light bar
402b: Marker
402c: Distance
402d: Bucket picture
402e: Target face
403: Footer area
403a: Menu icon
403b: Unlock icon
403c: Lock icon
403d: Emphasis lock icon
403e: Locked state release method
403f: Movement notification
404: Menu
404a: Menu title
404b to 404d: Menu item

## Claims

1. An information input system for a work machine comprising:
a controller that is mounted on the work machine; and
an information terminal that inputs information to the controller via communication, wherein
an input of the information from the information terminal to the controller is disabled in a case where the information terminal is located at a predetermined position in an operation room of the work machine.

2. The information input system for a work machine according to claim 1, wherein
the input of the information from the information terminal to the controller is enabled in a case where the information terminal is located at a position deviated from the predetermined position.

3. The information input system for a work machine according to claim 1 or 2, wherein
the input of the information from the information terminal to the controller is enabled in a case where the work machine is in an inoperable state even when the information terminal is located at the predetermined position.

4. The information input system for a work machine according to claim 2, wherein
the information terminal has an information terminal notification device, and
the information terminal notification device reports at least either information on whether the information terminal is located at the predetermined position or information on whether the input of the information from the information terminal to the controller is disabled.

5. The information input system for a work machine according to claim 1 or 2, wherein
the information terminal has an information terminal notification device, and
the information terminal notification device reports information, the information indicating that the input of the information from the information terminal to the controller is disabled, in a more emphasized manner relative to a case where no input operation is performed on the information terminal, in a case where an input operation is performed on the information terminal in a state where the input of the information from the information terminal to the controller is disabled.

6. The information input system for a work machine according to claim 1 or 2, wherein
the information terminal has an information terminal notification device, and
the information terminal notification device reports information indicating a method of enabling the input of the information from the information terminal to the controller, in a case where an input operation is performed on the information terminal in a state where the input of the information from the information terminal to the controller is disabled.

7. The information input system for a work machine according to claim 2, wherein
the information terminal has an information terminal notification device, and
the information terminal notification device reports information indicating that a position of the information terminal has been changed, in a case where the position of the information terminal has been changed in a state where the input of the information from the information terminal to the controller is disabled.

8. The information input system for a work machine according to claim 1, wherein
the input of the information from the information terminal to the controller is disabled by making an input operation to the information terminal impossible.

9. The information input system for a work machine according to claim 8, wherein
a part of the input operation to the information terminal is enabled in a case where a specific operation is performed on the information terminal in a state where the input of the information from the information terminal to the controller is disabled.
